# EUROPÄISCHE PATENTSCHRIFT

(11) **EP 0 506 050 B1**
(45) Veröffentlichungstag und Bekanntmachung des Hinweises auf die Patenterteilung: **05.06.1996**
(21) Anmeldenummer: 92105215.5
(22) Anmeldetag: 26.03.1992
(51) Int. Cl.: C01B 7/07

(54) **Verfahren zur Herstellung einer von Fremdhalogenen gereinigten Salzsäure**
Process for the preparation of hydrochloric acid purified of foreign halogen
Procédé de préparation d'acide chlorhydrique purifiée d'halogènes étrangers

(30) Priorität: 27.03.1991 DE 4110177
(43) Veröffentlichungstag der Anmeldung: 30.09.1992
(73) Patentinhaber: QVF Glastechnik GmbH, 65201 Wiesbaden (DE)
(72) Erfinder: Dichtl, Gottfried, W-6501 Nieder-Olm (DE)
(74) Vertreter: Andrae, Steffen, Dr.

(56) Entgegenhaltungen:
- EP-A- 0 399 588
- EP-A- 0 425 922
- DE-C- 1 036 825
- US-A- 4 154 804
- US-A- 4 714 604

## Beschreibung

Die Erfindung betrifft ein Verfahren zur Herstellung von Salzsäure, die frei von den Halogenen Fluor, Brom und/oder Jod und ihren entsprechenden Wasserstoffverbindungen und deren Salzen ist, aus einer rohen verdünnten Salzsäure, die wenigstens eines der genannten Halogene als solches oder in Form seiner Wasserstoffverbindung oder eines ihrer Salze als Verunreinigung enthält.

Eine rohe verdünnte Salzsäure, die mit den Fremdhalogenen Fluor, Brom und/oder Jod insbesondere in Form ihrer Halogenwasserstoffsäuren oder deren Salze verunreinigt ist, fällt als Nebenprodukt bei einer Reihe industrieller Prozesse an.

Beispielsweise wird eine verdünnte Salzsäure bei der Reinigung von Abgas mit hohem Chloridgehalt, insbesondere von Abgas aus Müll- und Sondermüllverbrennungsanlagen, bei der Abgaswäsche mit Wasser gebildet. Ein derartiges Verfahren, das auch eine Aufkonzentrierung der gebildeten Salzsäure über die Stufe einer azeotropen Salzsäure hinaus umfaßt, ist in der EP-A-393 402 beschrieben. Das beschriebene Verfahren sieht keine besonderen Maßnahmen zur Entfernung von Fremdhalogenen aus der gewonnenen Salzsäure vor. Der Gehalt von Fluorwasserstoff (HF) soll normalerweise unbedeutend sein.

Es hat sich jedoch gezeigt, daß je nach Herkunft des gereinigten Abgases auch erhebliche Mengen an HF in die gebildete verdünnte Salzsäure gelangen können, und daß bei der Abgasreinigung und als Nebenprodukt anderer chemischer Prozesse auch verdünnte Salzsäuren gebildet werden, die zusätzlich zu HF oder anstelle von HF auch noch HBr und/oder HJ oder entsprechende Salze enthalten können. Die Anwesenheit derartiger Fremdhalogene in der gebildeten Salzsäure erschwert jedoch deren industrielle Weiterverwendung.

Es ist grundsätzlich bekannt, zur Abtrennung von HF bzw. Fluoriden von HCI Salze einzusetzen, die mit HF unter Bildung von in Wasser unlöslichen Fluoridniederschlägen reagieren:
In der US-A-4 154 804 wird ein Verfahren beschrieben, bei dem HF aus einer Gasmischung von HCI, HF sowie organischen Verbindungen dadurch abgetrennt wird, daß die Gasmischung unter sorgfältig kontrollierten Temperaturbedingungen mit einer wäßrigen Lösung von CaC1₂ und HCI in Kontakt gebracht wird, wobei HF aus der Gasphase von der wäßrigen Lösung absorbiert und in einen unlöslichen Niederschlag überführt wird. Das Produkt ist ein HCI enthaltendes Gas, das frei von HF ist.

In der DE-C-1 036 825 wird ein Verfahren beschrieben, bei dem Salzsäure aus ihrem Gemisch mit Fluorverbindungen separiert wird, so daß eine Salzsäure entsteht, die einen sehr geringen Fluorgehalt besitzt. Bei diesem Verfahren wird HCI aus der Oberfläche einer wäßrigen Salzsäurelösung heraus verflüchtigt, die ein lösliches Ausscheidemittel für Fluoride enthält. Als Ausscheidemittel ist vorrangig Aluminiumchlorid genannt. Die Abdestillation bzw. Rektifikation der wäßrigen Salzsäure erfolgt direkt aus einer fluoridhaltigen Lösung, die das Ausscheidemittel und somit auch das davon gebundene Fluorid enthält.

Die ältere, nachveröffentlichte EP 0 425 922 A1 beschreibt ein Verfahren zur Reinigung und Aufkonzentrierung von verdünnter Salzsäure, die u.a. mit HF verunreinigt ist und insbesondere aus der Rauchgaswäsche von Müll- und Sondermüllverbrennungsanlagen stammt. Zur Abtrennung von HF wird die verunreinigte verdünnte Salzsäure einem thermischen Trennprozeß, d.h. einer Destillation oder Rektifikation, unter Zusatz von gelösten fluoridbindenden Zusätzen, insbesondere eines Gemischs aus Aluminiumchlorid und Alkalichlorid, unterworfen. Der Zusatz kann sowohl im Vorverdampfer, in der Vakuumstufe und/oder der Druckstufe einer Destillation erfolgen, und die gebildeten Fluoride werden im Kolonnensumpf gesammelt. Dadurch, daß der thermische Trennprozeß in Gegenwart der gebildeten Fluoride erfolgt, gelingt es zumindestens im Falle einer Verwendung von CaC1₂ nicht, eine vollständig von Fluorverbindungen freie Salzsäure zu erhalten, da die in der Gleichgewichtsmischung vorhandenen HF-Anteile mit der Salzsäure abdestilliertwerden und sich das Gleichgewicht unter Neubildung von HF verschiebt.

Es ist Aufgabe der vorliegenden Erfindung, ein Verfahren zu schaffen, das die Entfernung von Fremdhalogenen aus einer rohen verdünnten Salzsäure, die wenigstens das Fremdhalogen Fluor als solches oder in Form seiner Wasserstoffverbindung oder eines seiner Salze als Verunreinigung enthält, ermöglicht, so daß eine gereinigte verdünnte Salzsäure gebildet wird, die, gegebenenfalls nach Aufkonzentrierung oder in Form daraus freigesetzter fremdhalogenfreier Salzsäuredämpfe mit maximal 100 Gew.-% HCI, einer üblichen industriellen Weiterverwendung zugeführt werden kann, und bei dem man, soweit sie als Fremdhalogene zusätzlich vorhanden sind, die Halogene Brom und Jod als wiederverwertbares Produkt erhalten kann.

Diese Aufgabe wird durch ein Verfahren gemäß Patentanspruch 1 gelöst.

Bevorzugte vorteilhafte Ausgestaltungen eines derartigen Verfahrens sind in den Unteransprüchen wiedergegeben.

Das erfindungsgemäße Verfahren sieht die Entfernung von einerseits HF und andererseits die gemeinsame Entfernung von HBr und HJ in zwei getrennten Verfahrensschritten vor, wobei je nach Art der in der verdünnten Salzsäure vorhandenen Fremdhalogene gegebenenfalls auch nur einer der genannten Verfahrensschritte durchgeführt werden kann. Es ist ferner darauf hinzuweisen, daß die Reihenfolge der Entfernung von HF einerseits und HBr und HJ andererseits frei gewählt werden kann.

Bei der Abgasreinigung durch Auswaschen mit Wasser wird üblicherweise eine 7 bis 10 %ige Salzsäure gebildet, die dann in einer Vorkonzentrierstufe ein- oder mehrstufig zum Azeotrop aufkonzentriert wird, das dann, wenn die Aufkonzentrierung trierung bei Normaldruck durchgeführt wird, zu einer 22 %igen Salzsäure führt. Eine weitere Aufkonzentrierung ist unter Verwendung wasserentziehender Mittel möglich, beispielsweise durch Extraktivrektifikation mit Schwefelsäure oder CaCl₂-Lösungen, wobei man bis zum reinen HCI-Gas gelangen kann.

Das erfindungsgemäße Verfahren kann direkt unter Einsatz der 7 bis 10 %igen verdünnten Salzsäure vor der Vorkonzentrierung durchgeführt werden, kann jedoch auch zwischen oder nach der ein- oder mehrstufigen Vorkonzentrierung oder auch nach der Hochkonzentrierstufe, z.B. durch Extraktivrektifikation, durchgeführt werden. Demgemäß kann in das erfindungsgemäße Verfahren eine Salzsäure eingesetzt werden, die eine HCI-Konzentration von 3 bis 36 Gew.- % aufweist.

Die bei dem erfindungsgemäßen Verfahren erhaltene, von Fremdhalogenen befreite Salzsäure kann anschließend auch in reine HCI-Dämpfe überführt werden.

Die Reinigungsbehandlung gemäß A) des erfindungsgemäßen Verfahrens zur Abtrennung von Fluorwasserstoff und Fluoriden erfolgt in einem besonderen Schritt unabhängig von der Reinigung und/oder Aufkonzentrierung der verdünnten Salzsäure durch Destillation und/oder Rektifikation. Hierzu wird die verdünnte Salzsäure mit einem Fällungsmittel für Fluorid versetzt, und zwar mit einem geeigneten löslichen Metallchlorid, insbesondere mit CaC1₂. Bei einer Verwendung einer wäßrigen Lösung von CaC1₂ als Fällungsmittel, die bevorzugt mit einer Konzentration von 20 bis 60 Gew.-% zugesetzt wird, wird die Fällungsreaktion durch die folgende Formelgleichung beschrieben: 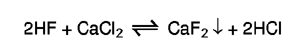 Zur möglichst quantitativen Entfernung von Fluorid bzw. HF erfolgt erfindungsgemäß eine Verschiebung des Gleichgewichts auf die rechte Seite durch Verwendung eines Überschusses des Fällungsmittels (CaCl₂) und durch die Entfernung des unlöslichen Reaktionsprodukts (CaF2) während der Umsetzung.

Bei dem erfindungsgemäßen Verfahren wird vorzugsweise so gearbeitet, daß der CaCl₂-Gehalt in der verdünnten Salzsäure und Reaktionslösung zwischen 4 und 40 Gew.-% liegt. Die Fällungsrekation wird vorzugsweise in einem Reaktionskessel oder Mischer durchgeführt, wobei die Reaktionslösung im Kreislauf über eine Feststoffabscheidestufe zur Abscheidung des gebildeten Niederschlags geführt wird. Diese Stufe kann in an sich bekannter Weise unter Verwendung eines Dekanters oder ähnlichen Apparats wie Filters oder Zyklons durchgeführt werden. Die Reaktionstemperatur der Fällung kann zwischen 20 und 120°C gewählt werden.

Bei dieser Abtrennung wird der Niederschlag gegebenenfalls in Suspensionsform mit einer geringeren Menge an Salzsäure, von der Hauptmenge der Salzsäure abgetrennt, die normalerweise auf dieser Stufe einen Gehalt an restlichem löslichen Chlorid, z.B. CaC1₂, enthält. Diese Chlorid-Salzsäure-Lösung kann nunmehr durch Destillation oder Rektifikation zur Gewinnung einer HF-freien Salzsäure weiterverarbeitet werden. Das Chlorid, beispielsweise das CaCl₂, verbleibt mit einem Rest an Salzsäure im Destillations- oder Rektifikationssumpf. Durch Zugabe von Kalkmilch (CaO) wird restliche Salzsäure zu CaCl₂ und H₂0 neutralisiert. Die erhaltene CaCl₂-Lösung kann wieder als Fällungsmittel in die Reaktion zurückgeführt werden.

Zur Entfernung weiterer Salze oder Verunreinigungen kann ein Teilstrom der Salzlösung auch abgezogen, neutralisiert und in einem Eindicker konzentriert werden. Das Konzentrat wird aus dem Eindicker stichfest erhalten.

Enthält die verdünnte Salzsäure, gegebenenfalls auch nach einer Behandlung gemäß der eben beschriebenen Art, als Fremdhalogenide Brom und/oder Jod in Form von HBr und/oder HJ oder deren Salzen, erfolgt nach dem erfindungsgemäßen Verfahren eine Entfernung dieser Fremdhalogenide durch Zugabe von Chlor. Durch die Zugabe von Chlor werden Bromide und/oder Jodide zu wiederverwertbarem elementarem Brom und/oder Jod nach den folgenden Gleichungen oxidiert: 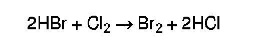 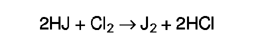 Die Umsetzung der verdünnten Salzsäure wird nach dem erfindungsgemäßen Verfahren bevorzugt wie nachfolgend beschrieben in einer Kolonne durchgeführt, sie kann jedoch auch in einem gesonderten Reaktionskessel oder einer Mischstrecke erfolgen. Um eine möglichst quantitative Oxidation aller Bromide und/oder Jodide zu erreichen, wird das Oxidationsmittel Chlor mit einem Überschuß, vorzugsweise etwa 10 %igen Überschuß, über die erforderliche stöchiometrische Menge zugegeben. Die Zugabe erfolgt unter solchen Bedingungen, daß eine vollständige Umsetzung gewährleistet ist. Das bei der Umsetzung mit Chlor gebildete elementare Brom und/oder Jod wird anschließend zusammen mit dem Überschuß des Oxidationsmittels Chlor mit Eigendampf der Säure oder zugegebenem Direktdampf oder Inertgas ausgestrippt. Die Trennung der elementaren Halogene Jod, Brom und Chlor erfolgt dadurch, daß man die unterschiedliche Sublimierbarkeit / Kondensierbarkeit der Halogene ausnutzt, die eine Abtrennung von Jod und Brom aus dem Chlorgas ermöglicht.

Die Umsetzung und das Strippen können nach dem erfindungsgemäßen Verfahren in einem Druckbereich von 100 mbar bis 6 bar durchgeführt werden. Durch die Wiedergewinnung des unumgesetzten Chlors und dessen Rückführung

in den Reaktionsbehälter, insbesondere die Kolonne oder den Reaktionskessel, mittels Kompressoren oder Gebläsen wird eine nahezu quantitative Umsetzung des bereitgestellten Chlors erreicht.

Nachfolgend wird das erfindungsgemäße Verfahren anhand von Figuren und Ausführungsbeispielen noch näher erläutert.

Es zeigen:
Figur 1 ein Fließbild einer Prozeßführung zur Durchführung der HF-Entfernung gemäß dem erfindungsgemäßen Verfahren; und
Figur 2 ein Fließbild einer Prozeßführung des erfindungsgemäßen Verfahrens, bei der nacheinander die Entfernung von Brom und/oder Jod sowie Fluor aus verdünnter Salzsäure vorgesehen ist.

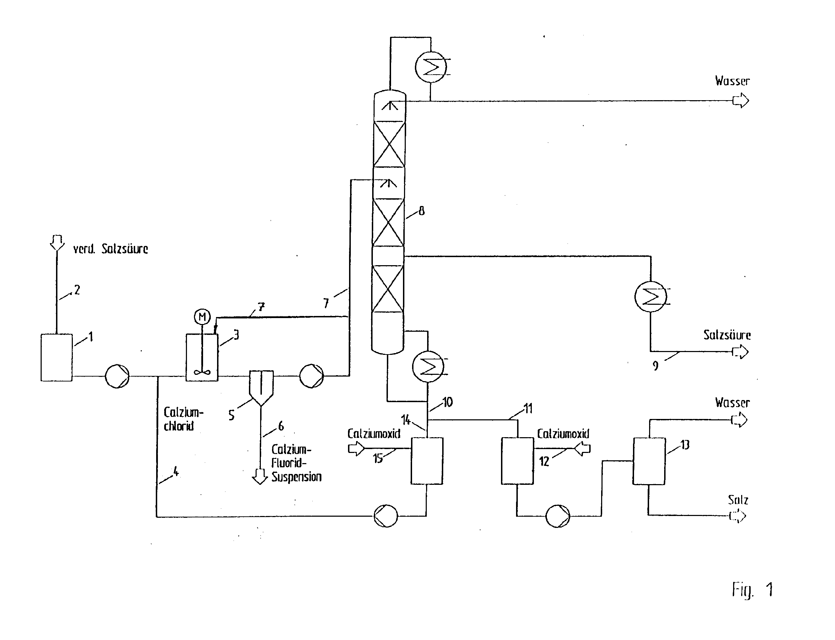

Bezugnehmend auf Figur 1 kann zur HF- bzw. Fluorid-Entfernung so vorgegangen werden, daß man aus einem Vorratstank 1 die verdünnte verunreinigte rohe Salzsäure 2 in einen Reaktionsbehälter 3 pumpt, in dem sie mit einer Chloridlösung zur Fällung des Fluoridgehalts, insbesondere einer Calciumchloridlösung 4, versetzt wird. Nach einem Abschluß der Fällungsreaktion wird der gebildete Niederschlag, insbesondere Calciumfluorid 6, in einem Dekanter 5 als Salzsäuresuspension abgezogen.

Die die Hauptmenge der Salzsäure enthaltende verbleibende CaC1₂-Salzsäurelösung 7 wird nach der Abtrennung des Niederschlags teilweise zur weiteren Umsetzung in den Reaktionsbehälter zurückgeführt und teilweise in einer Kolonne 8 rektifiziert, wobei auf einem mittleren Niveau eine HF-freie Salzsäure 9 und am Kolonnenkopf Wasser abgezogen werden.

Die im Sumpf zurückbleibende Salzlösung, insbesondere CaC1₂-Lösung 10 enthält auch HCI und gegebenenfalls andere Salze. Ein Teilstrom 11 dieser CaCl₂-Lösung wird mit CaO 12 neutralisiert und in einem Eindicker 13 stichfest konzentriert.

Der verbleibende weitere Teilstrom der CaC1₂-Lösung 14 wird ebenfalls mit CaO 15 versetzt, um die CaCl₂-Verluste auszugleichen, und als Fällungsmittel erneut in den Reaktionsbehälter 3 zurückgeführt.

Aufgrund der Möglichkeit, einen Überschuß Fällungsmittel einzusetzen, ist eine als quantitativ bezeichenbare Fluoridentfernung aus der verdünnten Salzsäure möglich. Die Abtrennung des Fluoridniederschlags vor der Reinigung/Konzentrierung der verdünnten Salzsäure verhindert es, daß durch Verschiebung des Gleichgewichts gebildetes HF wieder in die zu reinigende Salzsäure gelangt.

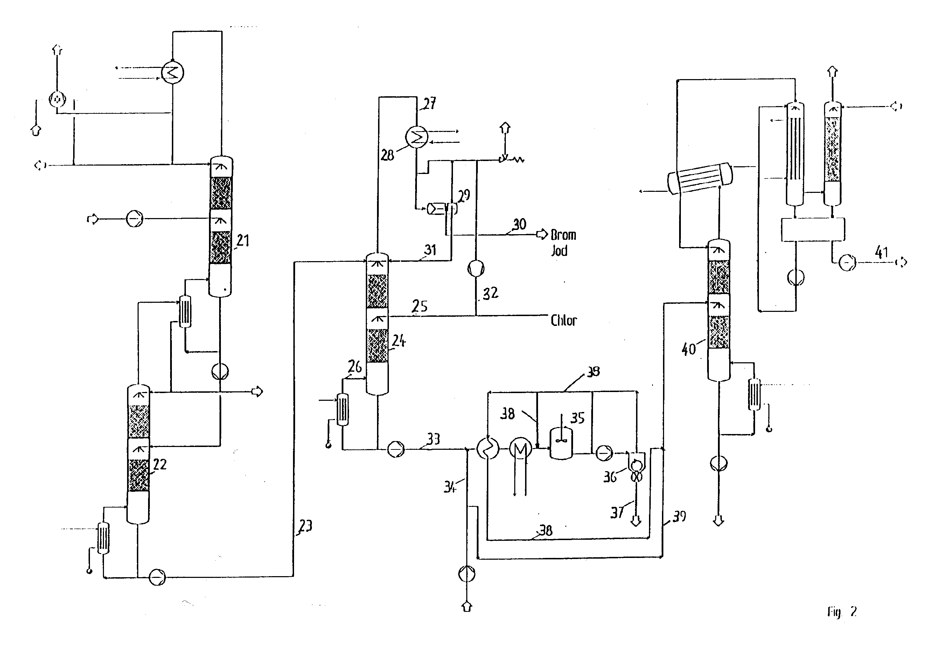

Nunmehr bezugnehmend auf Figur 2 zeigt diese ein Fließbild eines Verfahrens, bei dem alle drei Fremdhalogenide entfernt werden können.

In das Verfahren wird eine in zwei Kolonnen 21 und 22 auf ca. 20 Gew.-% vorkonzentrierte Salzsäure 23 eingesetzt. Diese wird zur Entfernung der Fremdhalogenide Brom und Jod zuerst dem Kopf einer Kolonne 24 zugeführt. Im mittleren Bereich der Kolonne 24 wird Chlor 25 zugegeben, und durch Eigendampf 26 oder Strippdampf wird das bei der Umsetzung gebildete Brom und/oder Jod aus dem Sumpf der Kolonne 24 über Kopf 27 zusammen mit überschüssigem unumgesetzten Chlor abgetrieben. Das Wasserdampf-Halogen-Gemisch wird zur Abtrennung der Halogene Brom, Jod und Jodbrom durch Abkühlung 28 kondensiert und in einem Abscheider 29 getrennt. Man erhält die Fremdhalogene als Gemisch 30. Die gleichzeitig gebildete Wasserphase 31 wird auf die Kolonne zurückgeleitet. Unumgesetztes, von Brom und Jod befreites Chlor 32 wird über ein Gebläse erneut der Kolonne 24 zugeführt.

Die auf diese Weise von Brom und Jod gereinigte Salzsäure 33 wird aus dem Kolonnensumpf abgezogen und der Fluoridentfernung zugeführt. Dazu wird sie mit einer ca. 50 %igen CaCl₂-Lösung 34 versetzt. Das in der Säure enthaltene Fluorid reagiert in einem Reaktor 35 mit dem Fällungsmittel zu Calciumfluorid, das als Niederschlag erhalten wird. In einem Dekanter 36 wird der CaF₂-Niederschlag 37 abgetrennt. Die CaCl₂-Salzsäure-Lösung 38 wird teilweise zur weiteren Umsetzung in den Reaktionsbehälter zurückgefahren, und der andere Teilstrom kann nunmehr abermals mit einer CaCl₂-Lösung 39 versetzt werden, um in der nachgeschalteten Kolonne 40 durch Extraktivdestillation eine Salzsäure 41 zu erhalten, die über die Azeotropstufe hinaus aufkonzentriert ist. Diese Salzsäure 41 ist frei von den Fremdhalogenen Fluor, Brom und Jod.

Nachfolgend wird das erfindungsgemäße Verfahren anhand von Beispielen noch näher erläutert.

### Beispiel 1

Die Entfernung von HF bzw. Fluorid aus Salzsäure durch Zugabe von CaC1₂ wurde im Labormaßstab getestet. Es wurden verschiedene Ansätze, in denen der HF-Gehalt im Bereich von 0,4 bis 1,5 Gew.-% und der Salzsäuregehalt von 3 bis 7 Gew.-% variierte, mit unterschiedlichen Calciumchloridmengen versetzt, so daß der Calciumchloridgehalt in der Reaktionsmischung im Bereich von 3 bis 25 Gew.-% variierte.

Die nachfolgende Tabelle 1 gibt die Zusammensetzung der Reaktionsmischung und den nach Abtrennung des CaF₂-Niederschlags und der nachfolgenden Destillation der gereinigten Salzsäure im Destillat gefundenen HF-Gehalt in Gew.-% wieder.

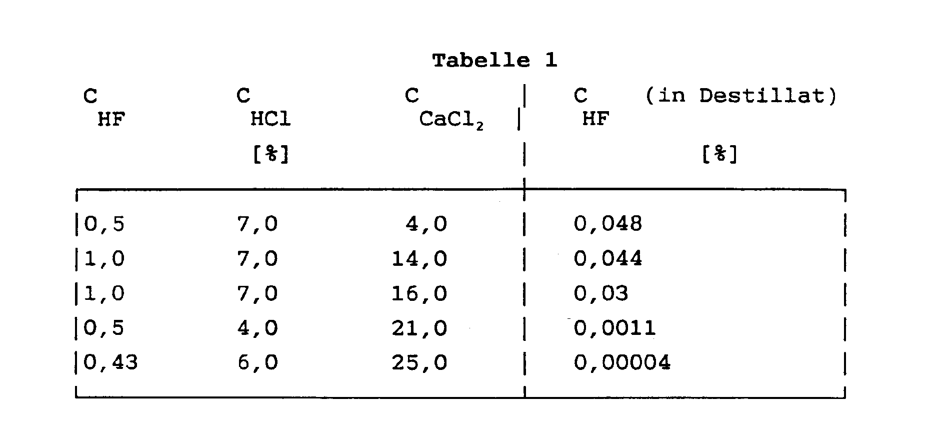

Es ist zu erkennen, daß nach dem erfindungsgemäßen Verfahren eine Entfernung von HF möglich ist, die als quantitativ bezeichnet werden kann.

### Beispiel 2

Die Entfernung von Bromid und Jodid aus einer verdünnten Salzsäure wurde unter Verwendung einer Versuchskolonne DN 100 getestet.

Dieser Versuchskolonne wurde eine verdünnte Salzsäure mit einem Salzsäuregehalt zwischen 3 und 20 Gew.-% und einem Bromid- und Jodgehalt zwischen 0,1 und 1,5 Gew.-% über Kopf zugegeben. Das Chlor wurde auf einem mittleren Niveau in einem stöchiometrischen Überschuß von 10 % zugegeben, und die im Sumpf erhaltene Lösung wurde mit Wasserdampf gestrippt.

Die nachfolgende Tabelle 2 enthält einige der erhaltenen Versuchsergebnisse, wobei einmal die Zusammensetzung der eingesetzten verdünnten Salzsäure (in Gew.-%) und zum anderen die Reinheit der erhaltenen gereinigten Säure (in ppm) an Chlor, restlichem HBr und restlichem HJ wiedergegeben wird.

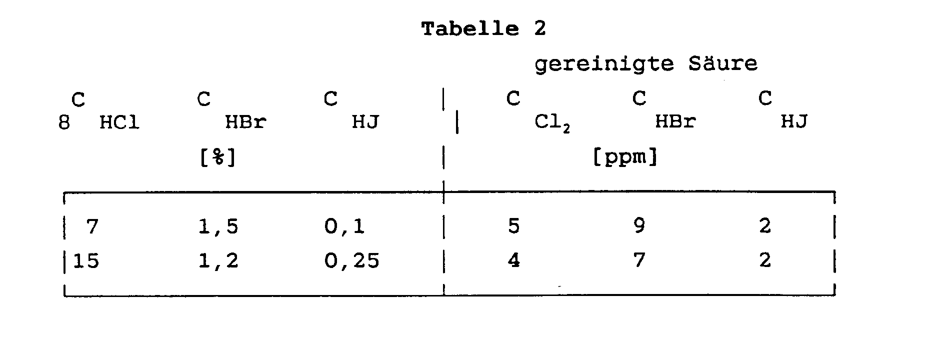

## Patentansprüche

1. Verfahren zur Herstellung von Salzsäure, die frei von den Halogenen Fluor, Brom und/oder Jod und ihren entsprechenden Wasserstoffverbindungen und deren Salzen ist, aus einer rohen verdünnten Salzsäure, die wenigstens das Halogenid Fluor als solches oder in Form seiner Wasserstoffverbindung oder seines Salzes als Verunreinigung enthält,
dadurch gekennzeichnet, daß man die rohe verdünnte Salzsäure, aus der gegebenfalls vorher vorhandene Anteile der Fremdhalogene Brom oder lod in einer gesonderten Vorbehandlung abgetrennt wurden, zur Abtrennung von Fluorwasserstoff und Fluoriden einer Reinigungsbehandlung unterwirft, bei der man ihr
a) einen erheblichen stöchiometrischen Überschuß wenigstens eines löslichen Chloridsalzes zusetzt, das den in der Salzsäure vorliegenden Fluorgehalt wenigstens zum größten Teil in einen unlöslichen Niederschlag überführt,
b) den sich während der Reaktion bildenden unlöslichen Niederschlag noch während der Fällungsreaktion aus der Reaktionslösung entfernt, indem man die Reaktionslösung im Kreislauf über eine Feststoffabscheidestufe führt, und
c) anschließend die Hauptmenge der aus Stufe b) erhaltenen, vom Niederschlag befreiten verdünnten Salzsäure, die den unumgesetzten Überschuß des Chloridsalzes enthält, einer Weiterverarbeitung durch Destillation und/oder Rektifikation zuführt.

2. Verfahren nach Anspruch 1, dadurch gekennzeichnet, daß man die gegebenfalls vorgesehene Abtrennung von Brom- und/oder Jodwasserstoff und Bromiden und/oder Jodiden durchführt, indem man der rohen Salzsäure
a) Chlor in einer solchen Menge zusetzt, die die erforderliche stöchiometrische Menge zur Freisetzung der Halogene Brom und/oder Jod aus ihren in der verdünnten Salzsäure vorhandenen Verbindungen übersteigt,
b) die gebildeten Halogene Brom und/oder Jod sowie überschüssiges unumgesetztes Chlor aus der verdünnten Salzsäure abtreibt,
c) nach einer Trennung des Chlors von den restlichen Halogenen Brom und/oder Jod das erstere in Stufe a) zurückführt und
d) die Halogene Brom und/oder Jod in kondensierter oder sublimierter Form, gegebenenfalls nach einer zusätzlichen Umsetzung mit einem oder mehreren Reaktionspartner(n), aus dem Prozeß ausschleust.

3. Verfahren nach Anspruch 1 oder 2, dadurch gekennzeichnet, daß man bei der Fluor(id)entfernung als lösliches Chlorid Calciumchlorid, Magnesiumchlorid oder Aluminiumchlorid, gegebenenfalls gemeinsam mit einem Alkalichlorid, zugibt.

4. Verfahren gemäß einem der Ansprüche 1 bis 3, dadurch gekennzeichnet, daß man die Umsetzung mit dem löslichen Chlorid bei einer Temperatur im Bereich von 20 bis 120°C durchführt.

5. Verfahren nach einem der Ansprüche 1 bis 4, dadurch gekennzeichnet, daß man als lösliches Chlorid Calciumchlorid in einer solchen Menge zugibt, daß seine Konzentration in der Reaktionslösung im Bereich von 4 bis 40 Gew.-% liegt.

6. Verfahren nach einem der Ansprüche 1 bis 5, dadurch gekennzeichnet, daß man zur möglichst quantitativen Entfernung von Fluorid bzw. HF das Reaktionsprodukt CaF₂ während der Reaktionszeit simultan aus der Reaktionslösung als unlöslichen Niederschlag entfernt.

7. Verfahren nach einem der Ansprüche 1 bis 6, dadurch gekennzeichnet, daß man den unlöslichen Niederschlag in einem Dekanter, einer Zentrifuge, einer Kammerfilterpresse, einer Mikrofiltration oder einem Hydrozyklon abtrennt.

8. Verfahren nach einem der Ansprüche 1 bis 7, dadurch gekennzeichnet, daß man dann, wenn man die Fluor(id)abtrennung bei erhöhter Temperatur vornimmt, die Reaktionslösung vor der Abtrennung des Niederschlags abkühlt.

9. Verfahren nach einem der Ansprüche 1 bis 8, dadurch gekennzeichnet, daß man die Abtrennung des Niederschlags und/oder die nachfolgende Destillation und/oder Rektifikation der Hauptmenge der Salzsäure bei einem Druck im Bereich von 100 mbar bis 6 bar durchführt.

10. Verfahren nach einem der Ansprüche 1 bis 9, dadurch gekennzeichnet, daß man die aus Stufe b) der Fluor(id)abtrennung erhaltene verdünnte, den Überschuß des unumgesetzten Chlorids enthaltende Salzsäure vor der Destillation/Rektifikation mit zusätzlichem Calciumchlorid versetzt.

11. Verfahren nach Anspruch 2, dadurch gekennzeichnet, daß man bei der Behandlung zur Brom(id)- und/oder lod(id)abtrennung Chlor in einem etwa 10 %igen Überschuß über die erforderliche stöchiometrische Menge zur Oxidation aller Bromide und/oder Jodide zusetzt.

12. Verfahren nach Anspruch 2 oder 11, dadurch gekennzeichnet, daß man das Chlor der verdünnten Salzsäure in einem Reaktionskessel oder einer Kolonne zusetzt.

13. Verfahren nach einem der Ansprüche 1, 11 oder 12, dadurch gekennzeichnet, daß man die Halogene Chlor, Brom und Jod aus der verdünnten Salzsäure durch Strippen mit Wasserdampf, Eigendampf der Säure oder Inertgas bei einem Druck im Bereich von 100 mbar bis 6 bar abtreibt.

14. Verfahren nach Anspruch 13, dadurch gekennzeichnet, daß man die Behandlung zur Brom(id)- und/oder lod(id)abtrennung in einer Kolonne durchführt, über deren Kopf man die rohe verdünnte Salzsäure aufgibt, der man das Chlor zwischen Kopf und Sumpfteil zuführt und in die man das Strippmedium Dampf, Eigendampf oder Inertgas im Sumpf einspeist.

15. Verfahren nach Anspruch 14, dadurch gekennzeichnet, daß man durch Strippen abgetriebenes und von den anderen Halogenen Brom und/oder Jod durch Kondensation und/oder Sublimation befreites unumgesetztes Chlor über Gebläse und/oder Kompressor(en) wieder in die Kolonne zurückführt.

16. Verfahren nach einem der Ansprüche 1 bis 15, dadurch gekennzeichnet, daß in die Reinigungsbehandlung(en) eine verdünnte Salzsäure mit einer Konzentration von 3 bis 36 Gew.-% einsetzt.

17. Verfahren nach Anspruch 16, dadurch gekennzeichnet, daß die verdünnte Salzsäure eine bei einer Abgasreinigung von Müllverbrennungsanlagen, Sondermüllverbrennungsanlagen, Kraftwerken oder Anlagen der chemischen Industrie und gegebenenfalls anschließenden Konzentrierung gewonnene verdünnte Salzsäure ist.

18. Verfahren nach einem der Ansprüche 1 bis 17, dadurch gekennzeichnet, daß man die Reinigungsbehandlung(en) vor einer vorgesehenen Azeotropkonzentrierung der verdünnten Salzsäure oder zwischen ihrer Azeotropkonzentrierung und Endkonzentrierung durchführt.

19. Verwendung eines Verfahrens gemäß einem der Ansprüche 1 bis 18 zur Herstellung von Salzsäure für die Herstellung von Chlorwasserstoffdämpfen, die frei von Fremdhalogenen sind.

## Claims

1. A method of producing hydrochloric acid free from the halogens fluorine, bromine and/or iodine and their corresponding hydrogen compounds and salts, from a crude dilute hydrochloric acid contaminated at least with the halide fluorine as such or in the form of its hydrogen compound or its salt, characterised in that the crude dilute hydrochloric acid, from which if required its content of the foreign halogens bromine or iodine has previously been separated in a separate previous operation, is subjected to purification treatment for removing hydrogen fluoride and fluorides, wherein
a) a considerable stoichiometric excess of at least one soluble chloride salt is added, converting at least the major part of the fluorine content in the hydrochloric acid into an insoluble precipitate,
b) the insoluble precipitate formed during the reaction is removed from the reaction solution during the precipitation reaction by circulating the solution through a solid-separating stage, and
c) the main quantity of the dilute precipitate-free hydrochloric acid obtained in step b) and containing the unreacted excess of chloride salt is additionally processed by distillation and/or rectification.

2. A method according to claim 1, characterised in that the separation, if required, of hydrogen bromide and/or hydrogen iodide and bromides and/or iodides is effected by
a) adding chlorine to the crude hydrochloric acid in a quantity which exceeds the stoichiometric quantity necessary for liberating the halogens bromine and/or iodine from the compounds thereof in the dilute hydrochloric acid,
b) the resulting halogens bromine and/or iodine and excess unreacted chlorine are stripped from the dilute hydrochloric acid,
c) after separation of the chlorine from the remaining halogens bromine and/or iodine, the chlorine is returned to stage a) and
d) the halogens bromine and/or iodine in condensed or sublimed form are discharged from the process, if required after an additional reaction with one or more reactants.

3. A method according to claim 1 or 2, characterised in that a soluble chloride in the form of calcium chloride, magnesium chloride or aluminium chloride, together if required with an alkali-metal chloride, is added during the fluorine or fluoride removal.

4. A method according to any of claims 1 to 3, characterised in that the reaction with the soluble chloride is effected at a temperature in the range from 20 to 120°C.

5. A method according to any of claims 1 to 4, characterised in that soluble chloride in the form of calcium chloride is added in a quantity such that its concentration in the reaction solution is in the range from 4 to 40 wt.%.

6. A method according to any of claims 1 to 5, characterised in that for the purpose of substantially quantitative removal of fluoride or HF, the reaction product CaF₂ is simultaneously removed in the form of an insoluble precipitate from the reaction solution during the reaction time.

7. A method according to any of claims 1 to 6, characterised in that the insoluble precipitate is separated in a decanter, a centrifuge, a chamber filter press, a microfiltration unit or a hydrocyclone.

8. A method according to any of claims 1 to 7, characterised in that when fluorine or fluoride is separated at elevated temperature, the reaction solution is cooled before separating the precipitate.

9. A method according to any of claims 1 to 8, characterised in that separation of the precipitate and/or subsequent distillation and/or rectification of the main quantity of hydrochloric acid is effected at a pressure in the range from 100 mbar to 6 bar.

10. A method according to any of claims 1 to 9, characterised in that additional calcium chloride is added before distillation/rectification to the dilute hydrochloric acid obtained from stage b) of fluorine or fluoride separation and containing the excess unreacted chloride.

11. A method according to claim 2, characterised in that during the treatment for removal of bromine and/or iodine or bromide and/or iodide, chlorine is added in an approximately 10% excess over the stoichiometric quantity required for oxidising all the bromides and/or iodides.

12. A method according to claim 2 or 11, characterised in that the chlorine is added to the dilute hydrochloric acid in a reaction boiler or a column.

13. A method according to any of claims 1, 11 or 12, characterised in that the halogens chlorine, bromine and iodine are stripped from the dilute hydrochloric acid by stripping with water vapour, vapour produced by the acid, or inert gas at a pressure in the range from 100 mbar to 6 bar.

14. A method according to claim 13, characterised in that the treatment for removal of bromine and/or iodine or bromide and/or iodide is performed in a column, the crude dilute hydrochloric acid being fed to the top of the column and chlorine being added between the top and the bottom part and the stripping medium, i.e. water-vapour, self-produced vapour or inert gas, being supplied at the bottom.

15. A method according to claim 14, characterised in that unreacted chlorine stripped off and freed from the other halogens bromine and/or iodine by concentration and/or sublimation is returned to the column by blowers and/or compressors.

16. A method according to any of claims 1 to 15, characterised in that a dilute hydrochloric acid at a concentration of 3 to 36 wt.% is used in the purification operation or operations.

17. A method according to claim 16, characterised in that the dilute hydrochloric acid is obtained from waste-gas purification in refuse incinerators, special refuse incinerators, power-stations or chemical industrial plants, followed by concentration if required.

18. A method according to any of claims 1 to 17, characterised in that the purification operation or operations are performed before planned azeotropic concentration of the dilute hydrochloric acid or between azeotropic concentration and final concentration.

19. Use of a method according to any of claims 1 to 18 for producing hydrochloric acid for the production of hydrogen chloride vapours free from foreign halogens.

## Revendications

1. Procédé de préparation d'acide chlorhydrique, exempt des halogènes fluor, brome et/ou iode, de leurs composés hydrogénés correspondants et de leurs sels, à partir d'un acide chlorhydrique dilué et brut, qui comporte au moins l'halogénure fluor en tant que tel, ou en forme de son composé hydrogéné ou de son sel, en qualité d'impureté, caractérisé en ce que l'acide chlorhydrique dilué et brut, dont ont été séparées d'éventuelles parts, prélablement présentes, des halogènes étrangers brome ou iode dans un traitement préalable séparé, est soumis, pour la séparation du fluorure d'hydrogène et des fluorures, à un traitement d'épuration dans lequel
a) cet acide est additionné d'un excès stoechiométrique notable d'au moins un sel de chlorure soluble, qui transforme la teneur en fluor présente dans l'acide chlorhydrique, en majeure partie au moins, en un dépôt insoluble,
b) le dépôt insoluble, formé pendant la réaction, est encore éliminé pendant la réaction de précipitation de la solution réactionnelle, cette dernière étant recyclée par l'intermédiaire d'un stade de séparation des solides,
c) la quantité principale d'acide chlorhydrique dilué, obtenu dans le stade b), débarrassé du dépôt, et qui comporte l'excès non converti de sel de chlorure, est envoyée à un traitement ultérieur par distillation et/ou rectification.

2. Procédé suivant la revendication 1, caractérisé en ce que la séparation, éventuellement prévue, du bromure d'hydrogène et/ou iodure d'hydrogène et des bromures et/ou iodures est assurée
a) en ajoutant du chlore à l'acide chlorhydrique brut en une quantité qui excède la quantité stoechiométrique requise pour le dégagement des halogènes, brome et/ou iode, de leurs composés présents dans l'acide chlorhydrique dilué,
b) en chassant les halogènes formés brome et/ou iode, ainsi que le chlore excédentaire non converti, de l'acide chlorhydrique dilué,
c) en recyclant le chlore dans le stade a), après sa séparation des halogènes résiduels brome et/ou iode, et
d) en expulsant du processus les halogènes brome et/ou iode sous une forme condensée ou sublimée, après une éventuelle conversion supplémentaire par un ou plusieurs partenaires réactionnels.

3. Procédé suivant l'une des revendications 1 ou 2, caractérisé par l'ajout en tant que chlorure soluble, lors de l'élimination du fluor/fluorures, de chlorure de calcium, de chlorure de magnésium ou de chlorure d'aluminium, conjointement avec un chlorure d'alcali le cas échéant.

4. Procédé suivant l'une des revendications 1 à 3, caractérisé en ce que la conversion par le chlorure soluble est assurée à une température dans un domaine de 10 à 120°C.

5. Procédé suivant l'une des revendications 1 à 4, caractérisé en ce que, en tant que chlorure soluble, du chlorure de calciumm est ajouté en une quantité telle que sa concentration dans la solution réactionnelle est dans le domaine de 4 à 40% en poids.

6. Procédé suivant l'une des revendications 1 à 5, caractérisé en ce que, pour l'élimination quantitative maximale du fluorure et/ou fluorure d'hydrogène, le produit de réaction CaF₂ est éliminé simutanément, pendant la durée de réaction, de la solution réactionnelle, sous forme de dépôt insoluble.

7. Procédé suivant l'une des revendications 1 à 6, caractérisé en ce que le dépôt insoluble est séparé dans un décanteur, une centrifugeuse, un filtre-presse à plateaux, une microfiltration ou un hydrocyclone.

8. Procédé suivant l'une des revendications 1 à 7, caractérisé en ce que la solution réactionnelle est refroidie avant la séparation du dépôt, si la séparation du fluor/fluorures est assurée à une température élevée.

9. Procédé suivant l'une des revendications 1 à 8, caractérisé en ce que la séparation du dépôt et/ou la distillation et/ou rectification suivante de la quantité principale d'acide chlorhydrique sont assurées sous une pression dans le domaine de 100 mbars à 6 bars.

10. Procédé suivant l'une des revendications 1 à 9, caractérisé en ce que l'acide chlorhydrique dilué, obtenu dans le stade b) de la séparation du fluor/fluorures, et contenant l'excès de chlorure non converti, est mélangé à du chlorure de calcium supplémentaire avant la distillation/rectification.

11. Procédé suivant la revendication 2, caractérisé en ce que, lors du traitement pour la séparation du brome (bromure) et/ou de l'iode <iodure>, du chlore est ajouté en excès de 10% environ par rapport à la quantité stoechiométrique requise pour l'oxydation de tous les bromures et/ou iodures.

12. Procédé suivant l'une des revendications 2 ou 11, caractérisé en ce que le chlore est ajouté à l'acide chlorhydrique dilué dans un réacteur ou dans une colonne.

13. Procédé suivant l'une des revendications 1, 11 ou 12, caractérisé en ce que les halogènes chlore, brome et iode sont chassés de l'acide chlorhydrique dilué par entraînement à la vapeur d'eau, à la vapeur propre de l'acide ou au gaz inerte, sous une pression dans le domaine de 100 mbars à 6 bars.

14. Procédé suivant la revendication 13, caractérisé en ce que le traitement pour l'élimination du brome (bromure) et/ou de l'iode (iodure) est assuré dans une colonne, en tête de laquelle est chargé l'acide chlorhydrique brut et di tué, à laquelle le chlore est envoyé entre la tête et le bas, et qui est alimentée en bas de colonne par l'agent d'entraînement vapeur, vapeur propre ou gaz inerte.

15. Procédé suivant la revendication 14, caractérisé en ce que le chlore non converti, chassé par entraînement et débarrassé des autres halogènes, brome et/ou iode, par condensation et/ou sublimation, est renvoyé dans la colonne par des soufflantes et/ou des compresseurs.

16. Procédé suivant l'une des revendications 1 à 15, caractérisé en ce qu'un acide chlorhydrique dilué, d'une concentration de 3 à 36% en poids, est utilisé dans le/les traitement/s d'épuration.

17. Procédé suivant la revendication 16, caractérisé en ce que l'acide chlorhydrique dilué est un acide dilué, obtenu lors d'une épuration des fumées d'incinérateurs de déchets, d'incinérateurs de déchets spéciaux, de centrales électriques ou d'installations de l'industrie chimique, et lors d une éventuelle concentration ultérieure.

18. Procédé suivant l'une des revendications 1 à 17, caractérisé en ce que le/les traitement/s d'épuration est/sont assuré/s avant une concentration azéotropique prévue de l'acide chlorhydrique dilué, ou entre sa concentration azéotropique et sa concentration finale.

19. Utilisation d'un procédé suivant l'une des revendications 1 à 18 pour la préparation d'acide chlorhydrique, en vue de produire des vapeurs d'acide chlorhydrique exemptes d'halogènes étrangers.
